(19) Europäisches Patentamt
European Patent Office
Office européen des brevets

(11) **EP 3 765 341 B1**

(12) **EUROPÄISCHE PATENTSCHRIFT**

(45) Veröffentlichungstag und Bekanntmachung des Hinweises auf die Patenterteilung:
**11.10.2023   Patentblatt 2023/41**

(21) Anmeldenummer: **19711551.2**

(22) Anmeldetag: **12.03.2019**

(51) Internationale Patentklassifikation (IPC):
**B60T 17/22** (2006.01)    **B60T 13/74** (2006.01)
**B60W 30/18** (2012.01)

(52) Gemeinsame Patentklassifikation (CPC):
**B60T 7/122; B60T 13/746;** B60T 2201/06;
F16H 63/48; F16H 2059/663

(86) Internationale Anmeldenummer:
**PCT/EP2019/056143**

(87) Internationale Veröffentlichungsnummer:
**WO 2019/175161 (19.09.2019 Gazette 2019/38)**

(54) **VERFAHREN ZUM AKTIVIEREN EINER PARKBREMSFUNKTION UND BREMSSYSTEM**

METHOD FOR ACTIVATING A PARKING BRAKING FUNCTION AND A BRAKING SYSTEM

PROCÉDÉ PERMETTANT D'ACTIVER UNE FONCTION DE FREIN DE STATIONNEMENT ET SYSTÈME DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.03.2018   DE 102018203776**

(43) Veröffentlichungstag der Anmeldung:
**20.01.2021   Patentblatt 2021/03**

(73) Patentinhaber: **Continental Automotive Technologies GmbH**
**30165 Hannover (DE)**

(72) Erfinder:
• **SCHEIB, Ralf**
  **60488 Frankfurt am Main (DE)**
• **SCHNEIDER, Heinz-Anton**
  **60488 Frankfurt am Main (DE)**
• **MARON, Christof**
  **60488 Frankfurt am Main (DE)**
• **SEIPEL, Gunther**
  **60488 Frankfurt am Main (DE)**
• **BREZZA, Giulio**
  **60488 Frankfurt am Main (IT)**

(74) Vertreter: **Continental Corporation**
**c/o Continental Teves AG & Co. OHG**
**Intellectual Property**
**Guerickestraße 7**
**60488 Frankfurt a. Main (DE)**

(56) Entgegenhaltungen:
WO-A1-99/39951          WO-A1-2010/100276
DE-A1-102004 059 688    DE-A1-102005 023 665
DE-A1-102007 035 541    DE-A1-102008 045 693
DE-A1-102016 215 990    FR-A1- 2 813 248
FR-B1- 2 813 248        US-A1- 2008 071 454
US-A1- 2011 224 880     US-A1- 2016 052 496

**Beschreibung**

Die Erfindung betrifft ein Verfahren zum Aktivieren einer Parkbremsfunktion einer Trommelbremse eines Bremssystems eines Fahrzeugs. Die Erfindung betrifft des Weiteren ein Bremssystem, welches dazu konfiguriert ist, ein solches Verfahren auszuführen.

Bremssysteme weisen typischerweise sowohl eine Betriebsbremse wie auch eine Parkbremse auf. Eine Betriebsbremse dient dabei insbesondere zum Verzögern des Fahrzeugs, während es sich über einen Untergrund bewegt. Eine Parkbremse dient dazu, ein bereits vollständig oder zumindest weitgehend zum Stillstand gekommenes Fahrzeug abzusichern und für eine Zeit, in welcher das Fahrzeug geparkt bleiben soll, zu halten und ein Wegrollen, auch an einem Hang, zu verhindern. Derartige Parkbremsen sind beispielsweise als Trommelbremsen realisiert.

Beim Aktivieren einer Parkbremse ist typischerweise ein hydraulischer Bremsdruck in der Betriebsbremse vorhanden, welcher das Fahrzeug bereits festhält, beispielsweise auch an einem Hang. Wenn dann der Fahrer den hydraulischen Druck aus der Betriebsbremse herausnimmt, überträgt sich das benötigte Hanghaltemoment von der Betriebsbremse auf die Parkbremse, wobei typischerweise Bremsbeläge in Bremstrommeln verschoben werden, um das benötigte Gegenmoment aufzubauen. Diese Verschiebung der Bremsbeläge bewirkt wiederum je nach Vorbedingung der Aktivierung der Parkbremse eine Änderung der zuvor aufgebrachten Kraft an einem Parkbremshebel. Die Änderung der Kraft am Parkbremshebel kann positiv (Kraftzunahme) oder negativ (Kraftverlust) sein.

Verfahren zur Berechnung einer nötigen Kraft sind im Stand der Technik bekannt, beispielsweise aus dem Dokument DE 10 2016 209 784 A1. Dabei ist es typischerweise nötig, einen maximalen Kraftverlust als Offset vorzuhalten, um sicher das benötigte Hanghaltemoment sicherzustellen. Hierdurch werden jedoch Energieverbrauch und Betätigungszeit einer elektrischen Parkbremse erhöht. Außerdem wird die Belastung über die Lebensdauer von verbauten Aktuatoren der Parkbremse und anderer Bauteile erhöht, da immer mit einem maximalen Kraftverlust gerechnet wird, obwohl dieser nicht immer vorhanden ist.

Die DE 10 2007 043 620 A1 beschreibt ein elektrisches Parkbremssystem mit einer Parkbrems ECU die eine Spannungssteuereinheit enthält, die die Reibungslementstoßkraft einer Bremse durch Steuern der Spannung eines Kabels steuert, und wobei die Sollspannung auf einen größeren Wert eingestellt wird, wenn ein Fahrzeug im Stillstand auf einer Abwärtssteigung gehalten wird, als wenn das Fahrzeug im Stillstand auf einer Aufwärtssteigung gehalten wird. Ob und wie eine Betriebsbremse elektrisch ansteuerbar vorgesehen sein soll, geht aus dieser Schrift nicht hervor.

Ein weiteres derartiges Feststellbremssystem ist aus der US 2008/071454 A1 bekannt.

Es ist deshalb eine Aufgabe der Erfindung, ein Verfahren zum Aktivieren einer Parkbremsfunktion bereitzustellen, welches im Vergleich zum Stand der Technik alternativ, beispielsweise zur Erreichung einer geringeren Belastung von Komponenten, ausgeführt ist. Es ist des Weiteren eine Aufgabe der Erfindung, ein Bremssystem zur Ausführung eines solchen Verfahrens bereitzustellen.

Dies wird erfindungsgemäß durch ein Verfahren nach Anspruch 1 und ein Bremssystem nach Anspruch 9 erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein Verfahren zum Aktivieren einer Parkbremsfunktion einer Trommelbremse eines Bremssystems eines Kraftfahrzeugs.

Die Trommelbremse weist eine Anzahl von Bremsbacken und eine Anzahl von Parkbremseinheiten auf, wobei die Bremsbacken zumindest mittels der Parkbremseinheiten auslenkbar sind, und wobei die Parkbremseinheiten elektrisch betätigbar sind.

Das Bremssystem weist ferner eine Anzahl von Betriebsbremseinheiten auf

- wobei jede Bremsbacke (30) sowohl mittels zumindest einer Parkbremseinheit (40) wie auch mittels einer Betriebsbremseinheit (50) mittels einer Steuerungsvorrichtung (60) betätigbar ist, wobei das Verfahren folgende Schritte aufweist

  - Ermitteln einer Anzahl von Signalen, welche eine Parksituation des Fahrzeugs charakterisieren,
  - Ermitteln eines Abschaltstroms in Abhängigkeit von den Signalen,
  - Betätigen der Parkbremseinheiten (40) mittels eines Stroms, und
  - Abschalten des Stroms, wenn der Strom den Abschaltstrom erreicht hat.

Durch das erfindungsgemäße Verfahren können unterschiedliche Parksituationen erkannt und dementsprechend ein Abschaltstrom berechnet werden, bis zu welchem eine Betätigung der Parkbremseinheiten mittels eines Stroms erfolgt. Wenn das Fahrzeug beispielsweise auf einer Ebene steht, kann der Abschaltstrom einen niedrigen Wert erhalten. Wenn das Fahrzeug an einem steilen Hang steht, kann der Abschaltstrom besonders hoch sein. Somit kann in zahlreichen Parksituationen, in welchen ein hohes Hanghaltemoment nicht erforderlich ist, der Abschaltstrom reduziert und damit die Belastung der Parkbremseinheiten, der Bremsbacken und anderer Komponenten deutlich verringert werden.

Bei den Signalen kann es sich insbesondere um Messwerte oder Ausgangsgrößen von Sensoren, um berechnete Größen, um Parameter oder um Zustände handeln, wobei typischerweise ein Zusammenhang zwischen einem jeweiligen Signal und einer Parksituation des Fahrzeugs bestehen sollte.

Bevorzugt charakterisiert zumindest ein Signal eine Hangneigung. Dadurch kann berücksichtigt werden, wie stark die Steigung ist, an welcher das Fahrzeug geparkt ist, oder ob es auf einer ebenen Fläche geparkt ist. Typischerweise kann der Abschaltstrom umso höher ermittelt werden, je höher die Hangneigung ist.

Bevorzugt charakterisiert zumindest ein Signal eine Fahrtrichtung bei letzter Betätigung der Betriebsbremseinheiten. Hierunter kann insbesondere verstanden werden, ob sich das Fahrzeug vorwärts oder rückwärts bewegt hat. Dadurch kann berücksichtigt werden, in welche Richtung das Fahrzeug vorher gefahren ist.

Bevorzugt charakterisiert zumindest ein Signal ein berechnetes oder benötigtes Hanghaltemoment. Dadurch kann ein tatsächlich erforderliches Hanghaltemoment mit in die Ermittlung einbezogen werden.

Bevorzugt charakterisiert zumindest ein Signal einen hydraulischen Druck in dem Bremssystem. Dadurch kann berücksichtigt werden, wie stark ein Fahrer oder auch eine Fahrzeugsteuerung vor dem Stillstand des Fahrzeugs das Fahrzeug gebremst hat, wobei sich der hydraulische Druck insbesondere auf eine Hydraulikeinheit zum Ansteuern der Betriebsbremseinheiten beziehen kann. Ein hoher Druck, welcher von einem Fahrer oder einer Steuerung aufgebracht wird, kann beispielsweise Anlass zum Ermitteln eines niedrigeren Abschaltstroms geben, um eine Überlastung zu vermeiden.

Bevorzugt charakterisiert zumindest ein Signal einen Reibwert von Bremsbelägen der Bremsbacken. Dadurch kann berücksichtigt werden, dass ein geringer Reibwert, welcher beispielsweise durch eine längere Nichtbenutzung verursacht sein kann, ein höheres Hanghaltemoment benötigt und somit Anlass zum Ermitteln eines höheren Abschaltstroms geben kann.

Bevorzugt charakterisiert zumindest ein Signal einen benötigten Seilzugweg beim Aktivieren der Parkbremseinheiten. Dadurch kann eventuellen Variationen im Seilzugweg Rechnung getragen werden.

Bevorzugt charakterisiert zumindest ein Signal eine Temperatur der Trommelbremse. Damit kann berücksichtigt werden, dass die Bremswirkung der Trommelbremse von der Temperatur abhängen kann, beispielsweise aufgrund thermischer Ausdehnung. Bevorzugt charakterisiert zumindest ein Signal eine Anzahl von bereits erfolgten Aktivierungen der Parkbremseinheiten. Dadurch kann der Tatsache Rechnung getragen werden, dass Parkbremseinheiten bzw. andere Komponenten bei jeder Aktivierung altern und somit eventuell eine höhere Bremskraft erfordern und damit einen Anlass zur Ermittlung eines höheren Abschaltstroms geben.

Es sei verstanden, dass alle hierin gegebenen Ausführungsbeispiele, insbesondere bezüglich der Signale, in beliebiger Weise miteinander kombiniert werden können. Alle solchen Gruppen und Untergruppen sind Bestandteil der Offenbarung dieser Anmeldung.

Der Abschaltstrom wird bevorzugt basierend auf einem Ausgangswert berechnet, wobei der Ausgangswert um eine Anzahl von Korrekturwerten korrigiert oder verringert wird. Dabei hängen ausschließlich die Korrekturwerte von den Signalen ab. Somit kann der Ausgangswert mittels bekannter Verfahren berechnet werden, beispielsweise wie dies in dem bereits eingangs genannten Dokument DE 10 2016 209 784 A1 beschrieben wurde. Dieser Wert kann dann korrigiert werden um Korrekturwerte, welche von den Signalen abhängen und insbesondere zu einer Verringerung führen können. Dadurch kann die Belastung, wie bereits erwähnt, reduziert werden.

Die Betriebsbremseinheiten können insbesondere vor Betätigung der Parkbremseinheiten betätigt sein. Nach Abschalten des Stroms können sie insbesondere gelöst werden. Dies entspricht einem normalen Anhaltemanöver, wobei das Fahrzeug zunächst über die Betriebsbremse abgebremst und dann von der Parkbremse längerfristig gehalten wird.

Eine durch die Betriebsbremseinheiten aufgebrachte Haltekraft kann nach Betätigung der Parkbremseinheiten insbesondere ganz oder teilweise von den Parkbremseinheiten aufgebracht werden. Hierdurch kann das erforderliche Haltemoment bzw. Drehmoment, welches zunächst durch eine Betriebsbremse aufgebracht wird, anschließend von der Parkbremse übernommen werden.

Der Strom kann beim Betätigen der Parkbremseinheiten insbesondere kontinuierlich ansteigen. Dadurch kann die Parkbremse sukzessive angezogen werden, wobei ein Abschalten erfolgt, wenn der erforderliche Abschaltstrom erreicht ist. Die Betriebsbremseinheiten können insbesondere hydraulisch betätigbar sein, beispielsweise durch ein typisches Zweikreisbremssystem eines Kraftfahrzeugs. Ein Druck zum Betätigen der Betriebsbremseinheiten kann dabei beispielsweise in einem Hauptbremszylinder mittels eines Bremspedals manuell aufgebaut werden, oder er kann auch mittels einer Pumpe oder einer ähnlichen Anordnung automatisch erzeugt werden. Die Betriebsbremseinheiten können jedoch alternativ oder zusätzlich auch elektrisch oder elektromechanisch betätigbar sein.

Die Parkbremseinheiten können insbesondere mittels eines Elektromotors oder Elektromagneten betätigbar sein. Dies entspricht einer Ausführung einer elektrischen Parkbremse, welche sich als vorteilhaft erwiesen hat.

Die Parkbremseinheiten können insbesondere selbsthemmend ausgeführt sein. Dadurch kann eine dauerhaft erforderliche Haltekraft durch die Selbsthemmung aufgebracht werden.

Die Erfindung betrifft des Weiteren ein Bremssystem. Das Bremssystem weist eine Trommelbremse mit einer Anzahl von Bremsbacken auf. Das Bremssystem weist eine Anzahl von Parkbremseinheiten sowie eine Anzahl von Betriebsbremseinheiten auf. Die Bremsbacken sind zumindest mittels der Parkbremseinheiten auslenkbar, wobei die Parkbremseinheiten elektrisch betätigbar sind. Das Bremssystem weist ferner eine Steuerungsvorrichtung auf, welche zur Ausführung eines erfindungsgemäßen Verfahrens konfiguriert ist. Jede Bremsbacke ist sowohl mittels zumindest einer Parkbremseinheit wie auch mittels einer Betriebsbremseinheit betätigbar. Anders ausgedrückt wirkt auf eine jeweilige Bremsbacke sowohl mindestens eine Parkbremseinheit wie auch eine Betriebsbremseinheit. Damit kann eine jeweilige Bremsbacke sowohl für eine Betriebsbremse wie auch für eine Parkbremse verwendet werden. Die entsprechende Ausführung kann auch nur für einige Bremsbacken gelten. Eine solche Ausführung entspricht insbesondere einer Simplex-Bremse.

Gemäß einer Ausführung ist jede Bremsbacke nur mittels einer Anzahl von Parkbremseinheiten betätigbar und die Betriebsbremseinheiten sind dazu ausgebildet, separat zur Trommelbremse zu wirken. Dies entspricht beispielsweise einer Dual-Servo-Bremse, wobei die Trommelbremsen mit den Parkbremseinheiten nur für die Realisierung einer Parkbremsfunktion vorgesehen sind. Die Betriebsbremseinheiten können dabei beispielsweise auf eine Scheibenbremse oder auf eine weitere Trommelbremse wirken.

Es kann beispielsweise eine Auswertung der tatsächlich vorhandenen Vorbedingungen bei Aktivierung einer elektrischen Parkbremse erfolgen, um situationsbedingte Belastungen von Aktuatoren und Teilen der Bremse zu minimieren. Dazu kann beispielsweise eine Ausrichtung des Fahrzeugs an einem Hang herangezogen werden. Es kann beispielsweise auch berücksichtigt werden, ob das Fahrzeug hangabwärts oder hangaufwärts geparkt wird. Es können auch eine Fahrtrichtung bei der letzten Betätigung der Servicebremse, eine Höhe eines hydraulischen Drucks, ein benötigtes Hanghaltemoment aufgrund der tatsächlichen Hangneigung, eine Temperatur einer Bremstrommel, eine Anzahl von Aktivierungen, ein Reibwert von Bremsbelägen oder ein benötigter Seilweg bei der Aktivierung einer elektrischen Parkbremse berücksichtigt werden.

Mittels bekannter Verfahren kann beispielsweise ein Abschaltstrom $i_{switch\_off}$ berechnet werden, welcher einen maximalen Kraftverlust als Offset-Wert berücksichtigt. Basierend auf dem bereits eingangs erwähnten Dokument DE 10 2016 209 784 A1 kann dies beispielsweise aus einer Sollkraft $F_{soll}$, einem Leerlaufstrom $i_{idle}$, einer Startspannung $u_{start}$, einer Temperatur $T_{env}$ und einem hydraulischen Druck $p_{hyd}$ mittels folgender Formel erfolgen:

$$i_{switch\_off} = g(f_1(F_{soll}), f_2(i_{idle}), f_3(u_{start}, T_{env}), f_4(T_{env}), f_5(p_{hyd}), ...)$$

Der derart berechnete Abschaltstrom $i_{switch\_off}$ kann dann in geeigneter Weise auf einen neuen Abschaltstrom $I_{switch\_off\_new}$ reduziert werden:

$$i_{switch\_off\_new} = i_{switch\_off} - g_{10}(f_{11}(Hangabwärts, -aufwärts), f_{12}(Fahrtrichtung), f_{13}(p_{hyd}), f_{14}(F_{soll}), f_{15}(T_{Trommel}), ...)$$

Hierfür können beispielsweise die Funktionen $f_{11}$ bis $f_{15}$ empirisch ermittelt werden. Die Funktion $g_{10}(...)$ kann beispielsweise die Ergebnisse der Funktionen $f_{11}$ bis $f_{15}$ (zum Beispiel additiv) verknüpfen und kann besondere Betriebszustände extra behandeln (zum Beispiel Hangneigung oder hydraulischer Druck). Ein Zuspannvorgang kann insbesondere beendet werden, sobald der aktuell gemessene Strom größer wird als der berechnete Abschaltstrom.

Die Funktion $f_{11}$ kann beispielsweise vorsehen, zu unterscheiden, ob das Fahrzeug hangabwärts oder hangaufwärts geparkt wird. Durch Messungen an Prüfständen und Fahrzeugen ist bekannt, dass je nach Ausführung einer Bremse, insbesondere einer Simplex-Bremse (Anordnung der Parkbremshebel und des Aktuators) ein Kraftverlust vorhanden ist oder nicht oder nur teilweise. Kann man also aufgrund der Parksituation davon ausgehen, dass es keinen oder nur einen geringen Kraftverlust am Parkbremshebel geben wird, dann soll durch die Funktion $f_{11}$ eine entsprechend geeignete Reduzierung des Abschaltstroms des Aktuators vorgenommen werden. Entsprechend können die Funktion $f_{12}$ eine Fahrrichtung, die Funktion $f_{13}$ einen hydraulischen Druck $p_{hyd}$, die Funktion $f_{14}$ einen Solldruck $F_{soll}$ und die Funktion $f_{15}$ eine Temperatur $T_{Trommel}$ einer Bremstrommel berücksichtigen.

Weitere Merkmale und Vorteile wird der Fachmann den nachfolgend mit Bezug auf die beigefügte Zeichnung beschriebenen Ausführungsbeispielen entnehmen. Dabei zeigen:

Fig. 1:    ein Bremssystem gemäß einem ersten Ausführungsbeispiel, und
Fig. 2:    ein Bremssystem gemäß einem zweiten Ausführungsbeispiel.

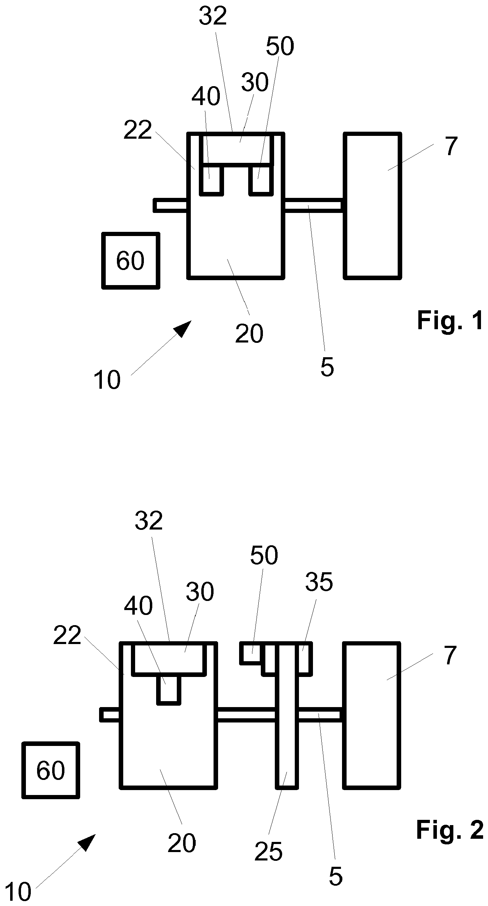

Fig. 1 zeigt ein Bremssystem 10 gemäß einem ersten Ausführungsbeispiel der Erfindung. Es ist dazu ausgeführt, ein erfindungsgemäßes Verfahren auszuführen.

Das Bremssystem 10 wirkt auf ein Rad 7, welches an einer Achse 5 angebracht ist. Das Bremssystem 10 weist eine Trommelbremse 20 mit einer Bremstrommel 22 auf, in welcher zumindest ein dargestellter Bremsbacken 30 angeordnet ist. Darauf ist ein Bremsbelag 32 zum Bremsen der Bremstrommel 22 angebracht.

Dem Bremsbacken 30 sind eine Parkbremseinheit 40 und eine Betriebsbremseinheit 50 zugeordnet. Diese sind dazu ausgebildet, die Bremsbacke 30 gegen die Bremstrommel 22 der Trommelbremse 20 zu drücken und dadurch eine Bremswirkung zu erzeugen. Die Parkbremseinheit 40 ist dabei elektromotorisch betätigbar. Die Betriebsbremseinheit 50 ist hydraulisch betätigbar.

Das Bremssystem 10 weist ferner eine Steuerungsvorrichtung 60 auf, welche dazu konfiguriert ist, Rechenschritte im Sinne eines erfindungsgemäßen Verfahrens auszuführen.

Die Steuerungsvorrichtung 60 erhält aus nicht dargestellten Sensoren Signale, welche eine Hangneigung betreffen, an welchem ein Fahrzeug geparkt wird, in welchem das Bremssystem 10 eingebaut ist. Des Weiteren zählt die Steuerungsvorrichtung 60 mit, wie oft die Parkbremseinheit 40 bereits betätigt wurde. Abhängig von diesen Werten berechnet sie einen Abschaltstrom bei jeder Anforderung einer Parkbremsfunktion.

Wird eine Parkbremsfunktion tatsächlich angefordert, beispielsweise weil ein Fahrer einen entsprechenden Schalter betätigt hat, wird zunächst überprüft, ob das Fahrzeug auch tatsächlich zum Stillstand gekommen ist. Dabei ist zu erwähnen, dass das Fahrzeug typischerweise mittels der Betriebsbremseinheit 50 zum Stillstand gebracht wird. Dementsprechend wird auch durch die Betriebsbremseinheit 50 eine Haltekraft ausgeübt, welche das Fahrzeug zunächst im Stillstand hält.

Die Steuerungsvorrichtung 60 erzeugt dann einen kontinuierlich ansteigenden Strom zum Betätigen der Parkbremseinheit 40. Der Strom steigt dabei solange an, bis der zuvor berechnete Abschaltstrom erreicht ist. Dann wird der Strom abgeschaltet und die Parkbremsfunktion wird aufgrund von Selbsthemmung der Parkbremseinheit 40 aufrechterhalten.

Durch die beschriebene Funktionalität können Zustände berücksichtigt werden, welche eine Absenkung des Abschaltstroms im Vergleich zu einem maximalen Abschaltstrom ermöglichen, der im Stand der Technik typischerweise verwendet wird. Dadurch kann eine Belastung der Komponenten deutlich verringert werden.

Es sei erwähnt, dass hier nur ein typisches Ausführungsbeispiel erläutert ist. Insbesondere können auch die anderen weiter oben beschriebenen Signale von der Steuerungsvorrichtung 60 entsprechend berücksichtigt werden.

Fig. 2 zeigt ein Bremssystem 10 gemäß einem zweiten Ausführungsbeispiel. Im Unterschied zum ersten Ausführungsbeispiel ist dabei die Betriebsbremseinheit 50 nicht in die Trommelbremse 20 integriert. Vielmehr weist das Bremssystem 5 eine separate Bremsscheibe 25 auf, welche auf der Achse 5 montiert ist. Die Bremsscheibe 25 weist separate Bremsbacken 35 auf, welche mittels der Betriebsbremseinheit 50 betätigbar sind. Somit sind Parkbremsfunktion und Betriebsbremsfunktion voneinander getrennt. Die Funktionalität der Steuerungsvorrichtung 60 ist jedoch entsprechend zum ersten Ausführungsbeispiel ausgeführt, so dass auf die obigen Ausführungen verwiesen werden kann.

Erwähnte Schritte des erfindungsgemäßen Verfahrens können in der angegebenen Reihenfolge ausgeführt werden. Sie können jedoch auch in einer anderen Reihenfolge ausgeführt werden. Das erfindungsgemäße Verfahren kann in einer seiner Ausführungen, beispielsweise mit einer bestimmten Zusammenstellung von Schritten, in der Weise ausgeführt werden, dass keine weiteren Schritte ausgeführt werden.

Die zur Anmeldung gehörigen Ansprüche stellen keinen Verzicht auf die Erzielung weitergehenden Schutzes dar.

## Patentansprüche

1. Verfahren zum Aktivieren einer Parkbremsfunktion einer Trommelbremse (20) eines Bremssystems (10) eines Fahrzeugs,

- wobei die Trommelbremse (20) eine Anzahl von Bremsbacken (30) und eine Anzahl von Parkbremseinheiten (40) aufweist, wobei die Bremsbacken (30) zumindest mittels der Parkbremseinheiten (40) auslenkbar sind, und wobei die Parkbremseinheiten (40) elektrisch betätigbar sind,
- wobei das Bremssystem (10) ferner eine Anzahl von Betriebsbremseinheiten (50) aufweist,

- wobei jede Bremsbacke (30) sowohl mittels zumindest einer Parkbremseinheit (40) wie auch mittels einer Betriebsbremseinheit (50) mittels einer Steuerungsvorrichtung (60) betätigbar ist,

- wobei das Verfahren folgende Schritte aufweist:

- Ermitteln einer Anzahl von Signalen, welche eine Parksituation des Fahrzeugs charakterisieren,
- Ermitteln eines Abschaltstroms in Abhängigkeit von den Signalen,
- Betätigen der Parkbremseinheiten (40) mittels eines Stroms, und

- Abschalten des Stroms, wenn der Strom den Abschaltstrom erreicht hat.

2. Verfahren nach Anspruch 1,

- wobei zumindest ein Signal eine Hangneigung charakterisiert.

3. Verfahren nach einem der vorhergehenden Ansprüche,

- wobei zumindest ein Signal eine Fahrtrichtung bei letzter Betätigung der Betriebsbremseinheiten (50) charakterisiert.

4. Verfahren nach einem der vorhergehenden Ansprüche,

- wobei zumindest ein Signal einen hydraulischen Druck in dem Bremssystem (10) charakterisiert.

5. Verfahren nach einem der vorhergehenden Ansprüche,

- wobei zumindest ein Signal einen Reibwert von Bremsbelägen (32) der Bremsbacken (30) charakterisiert.

6. Verfahren nach einem der vorhergehenden Ansprüche,

- wobei zumindest ein Signal eine Temperatur der Trommelbremse (20) charakterisiert.

7. Verfahren nach einem der vorhergehenden Ansprüche,

- wobei zumindest ein Signal eine Anzahl von bereits erfolgten Aktivierungen der Parkbremseinheiten (40) charakterisiert.

8. Verfahren nach einem der vorhergehenden Ansprüche,

- wobei der Abschaltstrom basierend auf einem Ausgangswert berechnet wird,
- wobei der Ausgangswert um eine Anzahl von Korrekturwerten korrigiert oder verringert wird,
- wobei ausschließlich die Korrekturwerte von den Signalen abhängen.

9. Bremssystem (10), aufweisend

- eine Trommelbremse (20) mit einer Anzahl von Bremsbacken (30),
- eine Anzahl von Parkbremseinheiten (40), und
- eine Anzahl von Betriebsbremseinheiten (50),
- wobei die Bremsbacken (30) zumindest mittels der Parkbremseinheiten (40) auslenkbar sind, und wobei die Parkbremseinheiten (40) elektrisch betätigbar sind,
- wobei jede Bremsbacke (30) sowohl mittels zumindest einer Parkbremseinheit (40) wie auch mittels einer Betriebsbremseinheit (50) betätigbar ist, und
- wobei das Bremssystem (10) ferner eine Steuerungsvorrichtung (60) aufweist, welche zur Ausführung eines Verfahrens nach einem der vorhergehenden Ansprüche konfiguriert ist.

10. Verfahren nach einem der Ansprüche 1 bis 8 oder Bremssystem (10) nach Anspruch 9,

- wobei jede Bremsbacke (30) nur mittels einer Anzahl von Parkbremseinheiten (40) betätigbar ist und die Betriebsbremseinheiten (50) dazu ausgebildet sind, separat zur Trommelbremse (20) zu wirken.


**Claims**

1. Method for activating a parking brake function of a drum brake (20) of a braking system (10) of a vehicle,

- wherein the drum brake (20) has a number of brake shoes (30) and a number of parking brake units (40), wherein the brake shoes (30) can be deflected at least by means of the parking brake units (40), and wherein the parking brake units (40) can be actuated electrically,
- wherein the braking system (10) further has a number of service brake units (50),
- wherein each brake shoe (30) can be actuated by means of a control device (60) both by means of at least one parking brake unit (40) and also by means of a service brake unit (50),
- wherein the method has the following steps:

  - determining a number of signals which characterize a parking situation of the vehicle,
  - determining a switch-off current depending on the signals,
  - actuating the parking brake units (40) by means of a current, and
  - switching off the current when the current has reached the switch-off current.

2. Method according to Claim 1,

  - wherein at least one signal characterizes a slope.

3. Method according to one of the preceding claims,

  - wherein at least one signal characterizes a direction of travel during the last actuation of the service brake units (50).

4. Method according to one of the preceding claims,

  - wherein at least one signal characterizes a hydraulic pressure in the braking system (10).

5. Method according to one of the preceding claims,

  - wherein at least one signal characterizes a coefficient of friction of brake linings (32) of the brake shoes (30).

6. Method according to one of the preceding claims,

  - wherein at least one signal characterises a temperature of the drum brake (20).

7. Method according to one of the preceding claims,

  - wherein at least one signal characterizes a number of activations of the parking brake units (40) that have already been carried out.

8. Method according to one of the preceding claims,

  - wherein the switch-off current is calculated on the basis of an initial value,
  - wherein the initial value is corrected or reduced by a number of correction values,
  - wherein only the correction values depend on the signals.

9. Braking system (10), having

  - a drum brake (20) with a number of brake shoes (30),
  - a number of parking brake units (40), and
  - a number of service brake units (50),
  - wherein the brake shoes (30) can be deflected at least by means of the parking brake units (40), and wherein the parking brake units (40) can be actuated electrically,
  - wherein each brake shoe (30) can be actuated both by means of at least one parking brake unit (40) and also by means of a service brake unit (50), and
  - wherein the braking system (10) further has a control device (60), which is configured to carry out a method according to one of the preceding claims.

10. Method according to one of Claims 1 to 8 or braking system (10) according to Claim 9,

  - wherein each brake shoe (30) can be actuated only by means of a number of parking brake units (40) and the service brake units (50) are configured to act separately from the drum brake (20).

**Revendications**

1.  Procédé permettant d'activer une fonction de frein de stationnement d'un frein à tambour (20) d'un système de freinage (10) d'un véhicule,

    - dans lequel le frein à tambour (20) présente un certain nombre de segments de frein (30) et un certain nombre d'unités de frein de stationnement (40), dans lequel les segments de frein (30) peuvent être écartés au moins au moyen des unités de frein de stationnement (40), et dans lequel les unités de frein de stationnement (40) peuvent être actionnées électriquement,
    - dans lequel le système de freinage (10) présente en outre un certain nombre d'unités de frein de service (50),
    - dans lequel chaque segment de frein (30) peut être actionné à la fois au moyen d'au moins une unité de frein de stationnement (40) et au moyen d'une unité de frein de service (50) au moyen d'un dispositif de commande (60),
    - dans lequel le procédé présente les étapes suivantes consistant à :

        - déterminer un nombre de signaux qui caractérisent une situation de stationnement du véhicule,
        - déterminer un courant de coupure en fonction des signaux,
        - actionner les unités de frein de stationnement (40) au moyen d'un courant, et
        - couper le courant si le courant a atteint le courant de coupure.

2.  Procédé selon la revendication 1,

    - dans lequel au moins un signal caractérise une pente.

3.  Procédé selon l'une quelconque des revendications précédentes,

    - dans lequel au moins un signal caractérise un sens de la marche pour le dernier actionnement des unités de frein de service (50).

4.  Procédé selon l'une quelconque des revendications précédentes,

    - dans lequel au moins un signal caractérise une pression hydraulique dans le système de freinage (10).

5.  Procédé selon l'une quelconque des revendications précédentes,

    - dans lequel au moins un signal caractérise un coefficient de frottement des garnitures de frein (32) des segments de frein (30).

6.  Procédé selon l'une quelconque des revendications précédentes,

    - dans lequel au moins un signal caractérise une température du frein à tambour (20).

7.  Procédé selon l'une quelconque des revendications précédentes,

    - dans lequel au moins un signal caractérise un nombre d'activations déjà effectuées des unités de frein de stationnement (40).

8.  Procédé selon l'une quelconque des revendications précédentes,

    - dans lequel le courant de coupure est calculé sur la base d'une valeur initiale,
    - dans lequel la valeur initiale est corrigée ou diminuée par un nombre de valeurs de correction,
    - dans lequel seules les valeurs de correction dépendent des signaux.

9.  Système de freinage (10), présentant

- un frein à tambour (20) muni d'un certain nombre de segments de frein (30),
- un certain nombre d'unités de frein de stationnement (40), et
- un certain nombre d'unités de frein de service (50),
- dans lequel les segments de frein (30) peuvent être écartés au moins au moyen des unités de frein de stationnement (40), et dans lequel les unités de frein de stationnement (40) peuvent être actionnées électriquement,
- dans lequel chaque segment de frein (30) peut être actionné à la fois au moyen d'au moins une unité de frein de stationnement (40) et au moyen d'une unité de frein de service (50), et
- dans lequel le système de freinage (10) présente en outre un dispositif de commande (60) qui est configuré pour exécuter un procédé selon l'une quelconque des revendications précédentes.

**10.** Procédé selon l'une quelconque des revendications 1 à 8 ou système de freinage (10) selon la revendication 9,

- dans lequel chaque segment de frein (30) ne peut être actionné qu'au moyen d'un certain nombre d'unités de frein de stationnement (40), et les unités de frein de service (50) sont réalisées pour agir séparément par rapport au frein à tambour (20).

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016209784 A1
- DE 102007043620 A1

- US 2008071454 A1